# EUROPEAN PATENT SPECIFICATION

(11) **EP 3 093 483 B1**
(45) Date of publication and mention of the grant of the patent: **01.05.2024**
(21) Application number: 14878047.1
(22) Date of filing: 26.11.2014
(51) Int. Cl.: F02N 11/08, F02N 11/10, F02N 15/06

(54) **ENGINE STARTING DEVICE**
MOTORSTARTVORRICHTUNG
DISPOSITIF DE DÉMARRAGE DE MOTEUR À COMBUSTION

(30) Priority: 07.01.2014 JP 2014000703
(43) Date of publication of application: 16.11.2016
(73) Proprietor: Hitachi Astemo, Ltd., Hitachinaka-shi, Ibaraki 312-8503 (JP)
(72) Inventor: KOKUBUN, Shuichi, Hitachinaka-shi Ibaraki 312-8503 (JP); WATARI, Shinjirou, Hitachinaka-shi Ibaraki 312-8503 (JP); NAKAZATO, Shigenori, Hitachinaka-shi Ibaraki 312-8503 (JP)
(74) Representative: MERH-IP Matias Erny Reichl Hoffmann Patentanwälte PartG mbB
(86) International application number: PCT/JP2014/081132
(87) International publication number: WO 2015/104910

(56) References cited:
- EP-A1- 2 508 747
- EP-A1- 2 568 159
- JP-A- H0 979 145
- JP-A- H10 259 775
- JP-A- 2012 140 895
- JP-U- S57 193 063
- JP-U- S57 193 063
- US-A1- 2012 032 453

## Description

### Technical Field

The present invention relates to an engine starter to start an engine of a vehicle.

### Background Art

In recent years, to save fuel consumption and preserve the environment, an idling stop function such that fuel supply to an engine is stopped and rotation of the engine is temporarily stopped when a vehicle temporality stops to wait for the light to change and the like is employed in some vehicles.

Also, before the vehicle is stopped or during inertia traveling in a decelerating condition in which an accelerator pedal is released during cruising travel, the idling stop is actively performed so that a region where the fuel supply to the engine is stopped is enlarged, and fuel consumption saving effect can be further enhanced.

When the idling stop is allowed, the fuel supply stop causes the engine to start the inertial rotation. After that, the engine goes through a swing-back state in which the engine repeats forward rotation and reverse rotation in a range near zero rotation, and the engine is completely stopped. When a request to restart is received in the swing-back period, it is necessary to quickly restart the engine to ensure vehicle starting performance. However, when the starter motor is rotated according to the engine restart request in a state where the engine is reversely rotated or is likely to be reversely rotated with some cause, the starter motor tries to make the engine, which is reversely rotated, rotate forward. Therefore, an excessive load is applied to the starter motor, and there is a possibility to damage a drive force transmission mechanism for transmitting a drive force of the starter motor to the engine.

A technique has been proposed in which a reverse rotation detecting unit for detecting whether the engine is reversely rotated is provided so as not to generate the excessive load to the starter motor when the starter motor is energized and the rotation of the starter motor is prohibited when the reverse rotation of the engine is detected. (refer to PTL 1) According to Patent Literature 1, when the reverse rotation of the engine is detected, the starter motor is not rotated. Therefore, the excessive load is not applied to the starter motor, and damage of the starter motor can be prevented. Further relevant prior art is described in JP S57 193063 U, US 2012/032453 A1, EP 2 508 747 A1 and EP 2 568 159 A1.

### Citation List

### Patent Literature

PTL 1: JP 4096863 B1

### Summary of Invention

### Technical Problem

In the technique disclosed in PTL 1, the reverse rotation of the engine is detected by detecting a rotation direction of a crankshaft in one cylinder in the engine, and the rotation of the starter motor is prohibited when the reverse rotation is detected. Also, whether the engine is reversely rotated is predicted by detecting a compressed state of gas in the one cylinder in the engine, and the rotation of the starter motor in a period when the reverse rotation of the engine is predicted is prohibited.

That is, according to the technique disclosed in PTL 1, in the period when the engine is reversely rotated or when the reverse rotation of the engine is predicted, the start of the engine by the starter motor is prohibited.

As a result, in a case where the engine is restarted due to change-of-mind, since the engine is restarted by driving the starter motor after the reverse rotation is completely stopped, a response delay of several hundred milliseconds at the maximum is gene rated from the time when the driver requests to restart the engine, and the driver may feel uncomfortable.

A purpose of the present invention is to provide an engine start control device which can solve the above problems.

### Solution to Problem

For solving the aforementioned problem it is provided an engine starter wherein the features defined in claim 1. Further preferred embodiments are defined in the dependent claims.

### Advantageous Effects of Invention

According to the present invention, an engine starter can be provided which can restart an engine without impairing engine starting performance while preventing a flow of an excessive load current to a starter motor. A problem, a structure, and an effect other than the above are described in the embodiments below.

### Brief Description of Drawings

[FIG. 1] FIG. 1 is an exemplary block diagram of an entire structure of an engine starter according to an arrangement The arrangement shown in FIG.1 is an embodiment of the present invention.
[FIG. 2] FIG. 2 is an exemplary block diagram of a structure of a starter control device (STM) used for the engine starter according to the arrangement .
[FIG. 3] FIG. 3 is an exemplary flowchart of an operation of the engine starter according to the arrangement at the time of a normal operation and at the time of an overload operation.
[FIG. 4] FIG. 4 is an exemplary block diagram of an entire structure of an engine starter according to another form of the arrangement. The arrangement shown in FIG.4 is helpful for understanding the present invention.
[FIG. 5] FIG. 5 is an exemplary block diagram of a structure of a starter control device (STM) used for the engine starter according to another form of the arrangement.
[FIG. 6] FIG. 6 is an exemplary block diagram of an entire structure of an engine starter according to still another form of the arrangement. The arrangement shown in FIG.6 is an embodiment of the present invention.
[FIG. 7] FIG. 7 is an exemplary block diagram of a structure of a starter control device (STM) used for the engine starter according to still another form of the arrangement.
[FIG. 8] FIG. 8 is an exemplary block diagram of an entire structure of an engine starter according to yet another form of the arrangement. The arrangement shown in FIG.8 is an embodiment of the present invention.
[FIG. 9] FIG. 9 is an exemplary block diagram of a structure of a starter control device (STM) used for the engine starter according to yet another form of the arrangement.

### Description of Arrangements

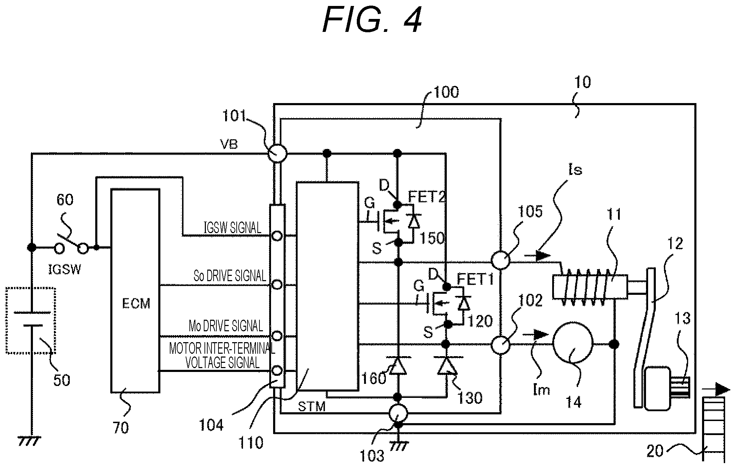

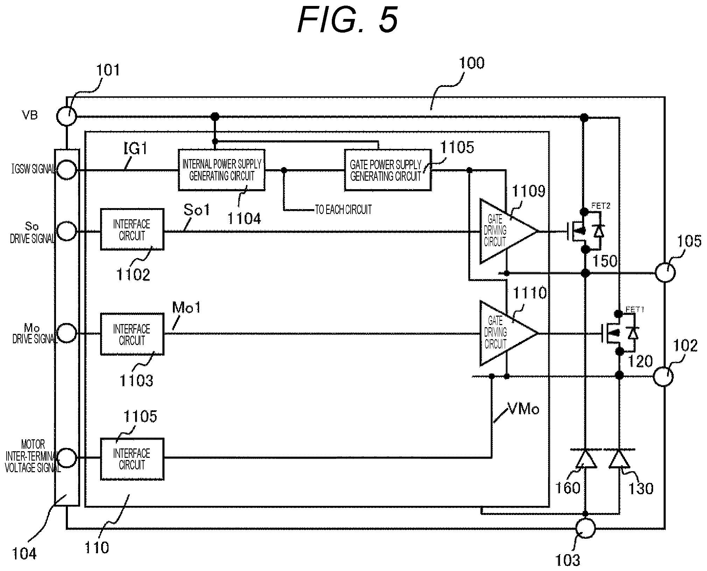

Arrangements are described below with reference to the drawings. In the following there are described some arrangements, however, the arrangement shown in FIGS.4 and 5 is helpful for understanding the present invention. The further arrangements are embodiments of the present invention.

### First arrangement

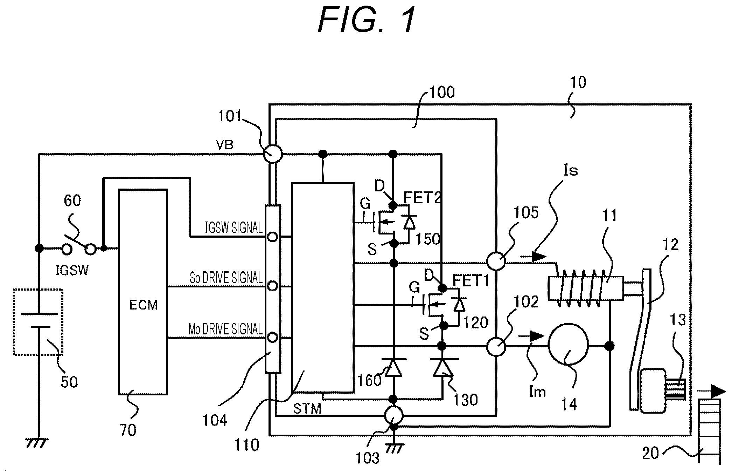

A structure and an operation of an engine starter according to a first arrangement is described with reference to FIGs. 1 to 3.

First, an entire structure of the engine starter according to the present arrangement is described with reference to FIG. 1.

FIG. 1 is a block diagram of the entire structure of the engine starter according to the arrangement .

An engine starter 10 in FIG. 1 includes a starter control device (STM) 100, a solenoid switch 11, a shift mechanism 12, a pinion 13, and a starter motor 14.

The STM 100 controls the starter motor 14 and the solenoid switch 11. The STM 100 includes terminals 101, 102, 103, 104, and 105 as input/output terminals.

When the STM 100 turns on the solenoid switch 11, the shift mechanism 12 is moved by a suction force, and the pinion 13 is moved in an arrow direction and is engaged with a ring gear 20 coupled to an engine. In the middle of or after the engagement, the STM 100 actuates the starter motor 14, and the rotation of the starter motor 14 is transmitted to the ring gear 20 via the pinion 13. Then, the engine is started by rotating a crankshaft of the engine 1 and controlling fuel and ignition.

A battery 50 mounted to a vehicle is connected to an engine control device (engine control module: ECM) 70 via an ignition switch (IGSW) 60.

The ECM 70 performs engine start/stop determination, ignition control, and fuel injection control. An input signal of the ECM 70 is an engine rotation signal, an air flow rate signal, and the like. An output signal of the ECM 70 is a signal to command the drive of the starter motor 14 (Mo drive signal) and a signal to command the drive of the solenoid switch 11 (So drive signal) via the terminal 104 of the STM 100, and an injection signal and an ignition signal for an injector which is not shown. The ECM 70 includes a microcomputer and an input/output interface circuit, and a constant voltage generation circuit which is a power supply for them, and the like which are not shown. In addition, the battery 50 is connected to the terminal 104 via the IGSW 60, and an on/off signal (IGSW signal) of the IGSW 60 is input to the STM 100.

The STM 100 is a control module of the starter motor 14 and the solenoid switch 11, and a battery voltage VB is input from the terminal 101. The STM 100 is grounded via the terminal 103.

The So drive signal and the Mo drive signal are input from the ECM 70 to a controller 110 for generating a control signal of the STM 100. The controller 110 generates signals to drive a gate terminal G of a semiconductor switch for controlling a current (FET) 150 of the solenoid switch 11 and a gate terminal G of a semiconductor switch for energization (FET) 120 of the starter motor 14 from the above signals and outputs them.

A drain terminal D of the FET 120 is connected to the battery 50 from the terminal 101. Also, a source terminal S is connected to a cathode of a free wheel diode 130 for refluxing the current, and then, is connected to the starter motor 14 via the terminal 102.

An anode of the free wheel diode 130 is connected to a ground of the starter motor 14 via the terminal 103.

A drain terminal D of the FET 150 is connected to the battery 50 via the terminal 101. Also, a source terminal S is connected to a cathode of a free wheel diode 160 for refluxing the current, and then, is connected to the solenoid switch 11 via the terminal 105.

An anode of the free wheel diode 160 is connected to a ground of the solenoid switch 11 via the terminal 103.

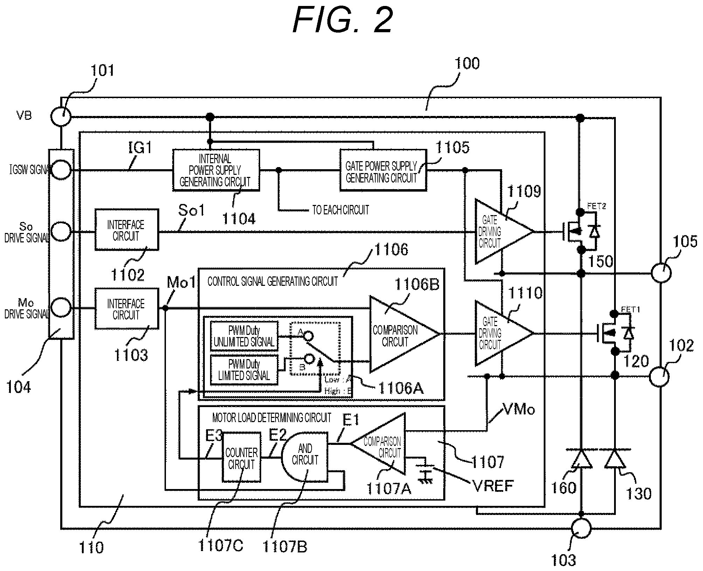

Next, a structure of the starter control device (STM) 100 used for the engine starter according to the present arrangement is described with reference to FIG. 2. FIG. 2 is a block diagram of the structure of the starter control device (STM) used for the engine starter according to the arrangement .

The STM 100 includes the controller 110. The controller 110 includes interface circuits 1102 and 1103 which convert the input signal from outside into an effective voltage signal according to a circuit element to be used, an internal power supply generating circuit 1104 which generates the power supply to a circuit to be used, a motor load determining circuit 1107 which determines whether the starter motor 14 is in an overload state based on an inter-terminal voltage VMo of the starter motor 14, a control signal generating circuit 1106 which generates a command signal to a MOSFET based on the output signal of the motor load determining circuit 1107, gate driving circuits 1109 and 1110 which control on/off of the MOSFET, and a gate power supply generating circuit 1105 which generates a power supply for turning on the MOSFET.

The interface circuit 1102 outputs an output signal So1 as High when the So drive signal is a command to turn on the FET 150.

Also, the interface circuit 1103 outputs an output signal Mo1 as High when the Mo drive signal is a command to turn on the FET 120.

Default settings of the signals So1 and Mo1 are set to be Low.

When the IGSW signal is input, the internal power supply generating circuit 1104 generates a power supply voltage of 5 V from the battery voltage VB and supplies power supply for operation to circuits included in the gate power supply generating circuit 1105 and the controller 110.

Also, when the power supply of 5 V is supplied, the gate power supply generating circuit 1105 generates the power supply voltage necessary for driving the gates of the FET 120 and the FET 150 and supplies it to the gate driving circuits 1109 and 1110.

The control signal generating circuit 1106 which generates the input signal of the gate driving circuit 1110 for driving the FET 120 includes an energization restriction determining circuit 1106A and a comparison circuit 1106B. The energization restriction determining circuit 1106A determines an upper limit value of the energization based on the output result of the motor load determining circuit 1107. The comparison circuit 1106B outputs a logical add of the output signal Mo1 of the interface circuit 1103 and the output signal E4 of the energization restriction determining circuit 1106A.

The energization restriction determining circuit 1106A outputs a signal which does not restrict the energization to the comparison circuit 1106B when the output signal E3 of the motor load determining circuit 1107 is Low. The energization restriction determining circuit 1106A outputs a signal which restricts the energization to the comparison circuit 1106B when the signal E3 is High. The signal which does not restrict the energization is a complete High signal which is a PWM signal of 100% Duty, and the signal which restricts the energization is a PWM signal of 50% Duty.

That is, the FET 120 does not have the energization restriction when the signal E3 is Low and is driven based on the Mo drive signal. When the signal E3 is High, the upper limit value for the energization is set. When an energization command value Mo1 of the signal Mo1 is larger than the upper limit value, the energization is restricted to the upper limit value. When the energization command value Mo1 is smaller than the upper limit value, the FET 120 performs on/off operation based on the Mo1 and controls the starter motor 14.

The set value of the energization restriction at the time when the signal E3 is High is determined based on an allowable value of a load which is applied to the starter motor by reverse rotation of the engine. It is not necessary to set the limit value of the energization to be 500. The set value may be higher/lower than 500.

In addition, the set value of the energization restriction at the time when the signal E3 is High is determined based on environmental conditions at the time when the engine starts. It is not necessary to fix the energization limit value to 500. The energization limit value may be variable set value determined according to the environmental conditions at the time when the engine starts. When the energization limit value is variable, the limit value may be set to be variable based on the temperature detection result obtained by newly providing a temperature detecting unit in the controller 110. Also, the limit value may be set to be variable according to an engine state by connecting the controller 110 to the ECM 70 via a serial communication function.

In addition, a PWM control frequency of the FET 120 when the energization is restricted is determined based on a time constant of the starter motor 14. It is not necessary for the PWM control frequency to be a fixed frequency. The PWM control frequency may be a variable set value determined based on the inter-terminal voltage VMo of the starter motor 14.

The motor load determining circuit 1107 which outputs the load state determination result of the starter motor 14 to the control signal generating circuit 1106 includes a comparison circuit 1107A which outputs comparison result (signal E1) of the inputs including the inter-terminal voltage VMo of the starter motor 14 and the reference voltage VREF, an AND circuit 1107B which outputs logical add calculation result (signal E2) of the inputs including the signal E1 and the output signal Mo1 of the interface circuit 1103, and a counter circuit 1107C which counts a state of the signal E2.

The comparison circuit 1107A outputs the signal E1 as High when the inter-terminal voltage VMo of the starter motor 14 is lower than the reference voltage VREF. The AND circuit 1107B outputs the signal E2 as High when the signal Mo1 is High and the signal E1 is High. After that, a state of signal E2 = High is continued for a predetermined time, the counter circuit 1107C outputs the signal E3 as High. Default settings of the signal E1, E2, and E3 are Low.

That is, when the Mo drive signal is a command for turning on the FET 120 and rotating the starter motor 14, the motor load determining circuit 1107 determines whether the starter motor 14 is in the overload state by directly monitoring the inter-terminal voltage VMo of the starter motor 14.

In addition, by providing the counter circuit 1107C, the motor load determining circuit 1107 is configured not to wrongly determine the overload state of the starter motor 14 based on the inter-terminal voltage VMo immediately after the energization to the starter motor 14 and before the generation of an induced voltage in the starter motor.

In addition, when the counter circuit 1107C has output the signal E3 as High and a predetermined time has elapsed after that, the motor load determining circuit 1107 resets the signal E3 from High to Low and energizes the FET 120 based on the Mo drive signal.

When the output signal So1 of the interface circuit 1102 is directly input to the gate driving circuit 1109 and the signal So1 is High, the gate driving circuit 1109 for driving the FET 150 turns on the FET 150.

That is, even when it is determined that the starter motor 14 is in the overload state and the energization of the FET 120 is restricted, the energization of the FET 150 is maintained not to be restricted and the pinion 13 is stably engaged with the ring gear.

In the above description, the So drive signal and the Mo drive signal are on/off binary signals. However, PWM signals may be used as the So drive signal and the Mo drive signal.

In this case, since the output signal E2 of the AND circuit 1107B is generated as the PWM signal, the counter circuit 1107C counts a High state of the signal E2 and determines the overload state based on the number of counts in the predetermined time.

In addition, the use of the PWM signal is realized by generating a limit signal as the PWM signal having the frequency synchronized with the Mo drive signal.

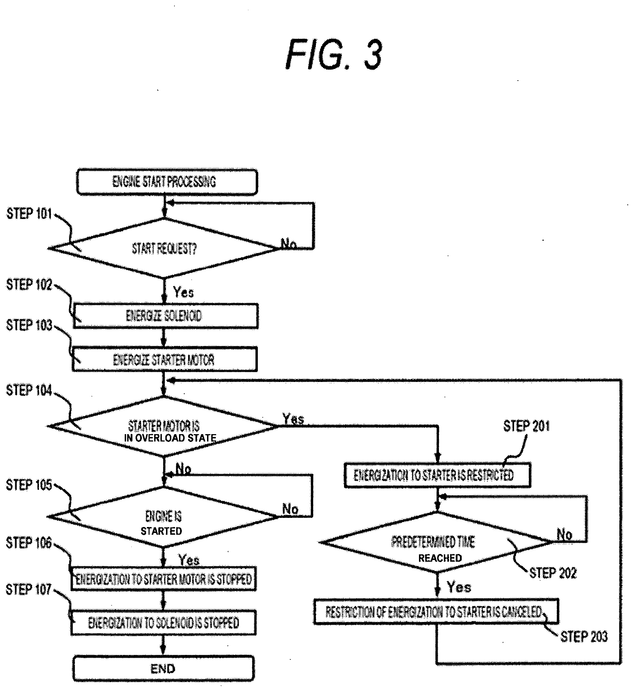

Next, a normal engine start operation and an engine start operation in a case where the overload state occurs of the engine starter according to the present arrangement are described with reference to FIG. 3. FIG. 3 is a flowchart of an operation of the engine starter according to the arrangement .

The normal engine start operation is described first.

In FIG. 3, a case below is described. A driver has already turned on the IGSW 60, the ECM 70 has started, and the engine has been stably rotated. After that, a condition for requesting idling stop is satisfied so that the engine starts to decelerate by inertial rotation by stopping the fuel supply to the engine. After that, when the engine reaches a range near zero rotation, the engine is restarted by a request of the driver to restart.

In step 101, the driver indicates the intension to restart by releasing a brake pedal. When the condition for requesting to restart the engine is satisfied and it is determined that the request for restarting the engine is generated, the procedure proceeds to step 102. The FET 150 is turned on based on a solenoid drive signal from the ECM 70, and the solenoid is energized. Then, the pinion 13 is moved by the shift mechanism 12 in the arrow direction and is engaged with the ring gear 20.

After that, the procedure proceeds to step 103. When a predetermined time elapses, the FET 120 is turned on based on a starter motor drive signal from the ECM 70, and the starter motor 14 is energized so that the pinion starts to rotate forward. Then, the pinion engages with the ring gear, and this makes the engine crank.

In step 104, when it is determined that the starter motor 14 is not in the overload state, the starter motor 14 is energized based on the starter motor drive signal from the ECM 70 and continues the cranking.

After that, the procedure proceeds to step 105. When the rotation of the engine reaches a predetermined number of rotations and the engine is completely combusted, the procedure proceeds to steps 106 and 107. The energization commands to the starter motor and the solenoid are canceled, and engine start processing is completed.

Next, the engine start operation in a case where the overload state is detected in step 104 is described.

The processing in which the driver indicates the intension to restart by releasing the brake pedal and condition for requesting to restart the engine is satisfied and it is determined that the request for restarting the engine is generated to the processing in step 103 are the same as those of the normal operation.

In step 104, when the starter motor 14 tries to rotate forward based on the starter motor drive signal in a state where the engine is reversely rotated with some cause, the inter-terminal voltage VMo of the starter motor 14 is decreased. After that, a state where the inter-terminal voltage VMo is equal to or lower than a threshold VREF is continued for a predetermined time, the motor load determining circuit 1107 determines that it is the overload state. The procedure proceeds to step 201, and the energization to the starter motor 14 is restricted by the control signal generating circuit 1106.

In this case, the energization to the starter motor is restricted. However, the energization to the solenoid is continued based on the command of the ECM 70.

When the energization restriction to the starter motor is started, the procedure proceeds to step 202. An energization restriction operation time is monitored, and the energization restriction is continued until the energization restriction operation time reaches a predetermined time.

In step 202, when it is determined that the energization restriction operation is continued for a predetermined time, the procedure proceeds to step 203. The energization restriction to the starter motor is canceled, and the procedure returns to step 104.

In step 104, when it is determined that the starter motor is in the overload state again, the procedure proceeds to step 201. When it is determined that the starter motor is not in the overload state, the procedure proceeds to step 2011. The starter motor is energized based on the command of the ECM 70 until the engine is completely combusted, and the starter motor 14 starts to rotate, and the engine cranks, and the start of the engine is completed.

As described above, according to the present invention, even when the starter motor is rotated by the request to restart in a state where the engine is reversely rotated or reverse rotation of the engine is predicted, an engine start control device can prevent the flow of an excessive load current in the starter motor while preventing a damage of a starter motor drive force transmission mechanism by preventing generation of an excessive load to damage the starter motor drive force transmission mechanism provided between the starter motor and the engine. While preventing decrease in the battery voltage caused by the excessive load current, the engine can be restarted without impairing engine starting performance.

In addition, the starter motor repeats the energization restriction and the energization based on the Mo drive signal at a predetermined interval in the overload state so that the cranking of the engine is available at the timing when the overload to the starter motor is reduced, and the engine can be quickly restarted.

### Second arrangement

FIGs. 4 and 5 are another arrangement .

FIG. 4 is a block diagram of an entire structure of an engine starter, and FIG. 5 is a block diagram of a structure of a starter control device (STM). The components and signals which are the same as those in FIGs. 1 and 2 are denoted with the same reference numerals.

In the first arrangement, the control signal generating circuit 1106 provided in the controller 110 determines an energization restriction value based on the output signal E3 of the motor load determining circuit 1107 and outputs it to the gate driving circuit 1110. Therefore, energization control of the starter motor 14 according to the environment conditions of the engine is not easy.

When the engine is started first, and especially, when the engine is started first at very low temperature by using the maximum torque characteristics of the starter motor 14 to the maximum extent, the motor load determining circuit 1107 determines that the starter motor 14 is in the overload state, and the energization to the starter motor 14 is restricted. Accordingly, the starter motor 14 cannot crank the engine so as to reach the number of rotations of the engine necessary for the complete combustion of the engine, and there is a possibility that the engine cannot be started.

In the second arrangement, as illustrated in FIG. 4, a motor inter-terminal voltage VMo is fed back to an ECM 70 via a terminal 104, and a microcomputer (which is not shown) provided in the ECM 70 calculates an optimal energization signal of the starter motor 14 based on environmental conditions at the time of engine start, an in-vehicle LAN signal, and a voltage signal between motor terminals and outputs a Mo drive signal to the terminal 104.

As illustrated in FIG. 5, the voltage signal between motor terminals is the motor inter-terminal voltage VMo output to the terminal 104 via an interface circuit 1105.

As described above, according to the second arrangement, the engine can be started by the optimal energization control of the starter motor according to the environmental conditions at the time of the engine start, and the engine can be started so as not to cause the overload of the starter motor in a case where the engine is restarted after idling stop is allowed.

In addition, since it is not necessary to provide the control signal generating circuit 1106 and the motor load determining circuit 1107 provided in the controller 110, a control circuit 110 can be inexpensively realized.

### Third arrangement

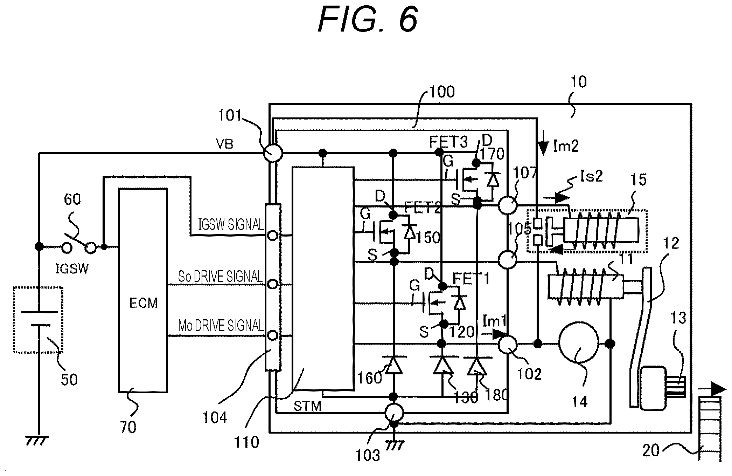

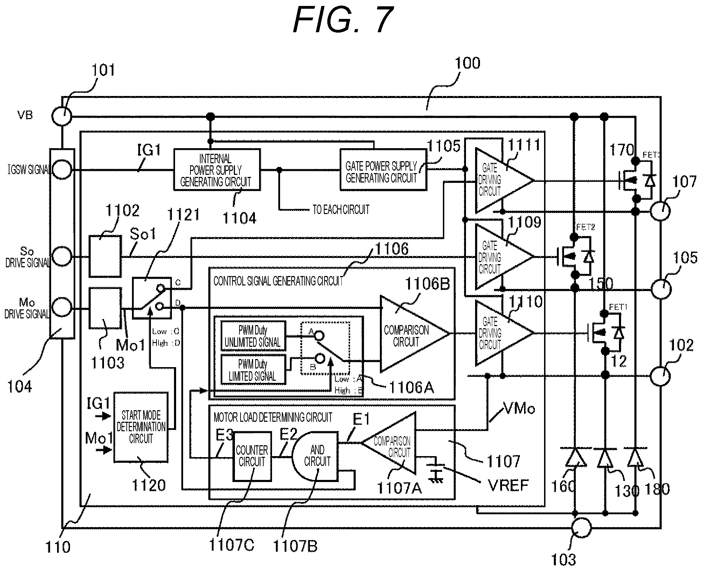

FIGs. 6 and 7 are still another arrangement .

FIG. 6 is a block diagram of an entire structure of an engine starter, and FIG. 7 is a block diagram of a structure of a starter control device (STM). The components and signals which are the same as those in FIGs. 1 and 2 are denoted with the same reference numerals.

As illustrated in FIG. 6, in addition to the components in FIG. 1, an engine starter 10 includes a FET 170 which is turned on/off according to a command from a controller 110, a magnetic switch 15 for energizing from a terminal 101 to a starter motor 14 when the FET 170 is turned on, a free wheel diode 180 which is connected between the terminal S of the FET 170 and the terminal 103, and a cathode of the free wheel diode 180 is connected to the terminal S of the FET 170 and a single terminal of a solenoid coil of the magnetic switch 15.

Also, as illustrated in FIG. 7, in addition to FIG. 2, the controller 110 includes a start scene determination circuit 1120 which determines whether the start is a first start based on an IGSW signal and a Mo drive signal and a gate driving circuit 111 which drives the FET 170.

When the start scene determination circuit 1120 has determined that the start is the first start scene, the Mo drive signal is output to the gate driving circuit 1111, and the starter motor 14 is energized via the magnetic switch 15 and rotates the engine.

Also, when the start scene determination circuit 1120 has determined that the start is the restart scene after idling stop is allowed, the Mo drive signal is output to the gate driving circuit 1110 via the gate driving circuit control signal generating circuit 1106, and the starter motor 14 is energized via the FET 120 and rotates the engine.

As described above, according to the third arrangement, when the engine is sometimes started by flowing a large current to the starter motor 14 in a case where the engine is started at the time when the engine is cooled and when the engine is started at the first time without having no possibility that an excessive load caused by reverse rotation of the engine is generated, the starter motor 14 is energized via the magnetic switch 15. Therefore, since a current capacity of the FET 120 can be set based on a motor current necessary for restarting the engine, the controller 110 can be inexpensively realized.

In addition, two lines of energization paths to the starter motor 14 are independently provided which are used at the time of the first start and at the time of restart. Accordingly, the life of the FET 120 can be improved.

In addition, even when a failure occurs in the FET 120, the engine can be surely started at the first time.

### Fourth arrangement

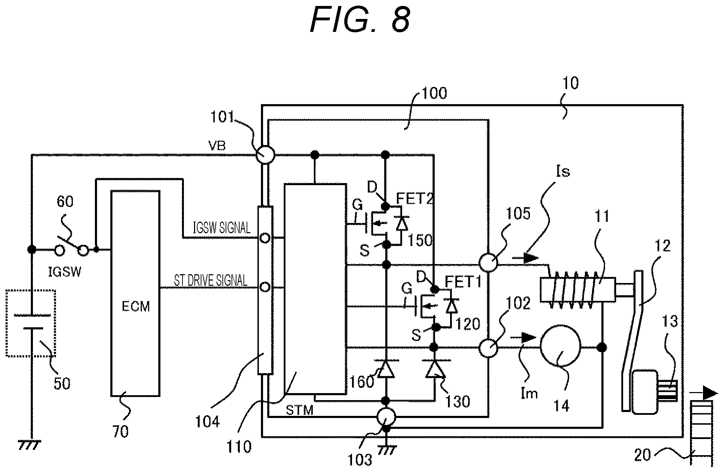

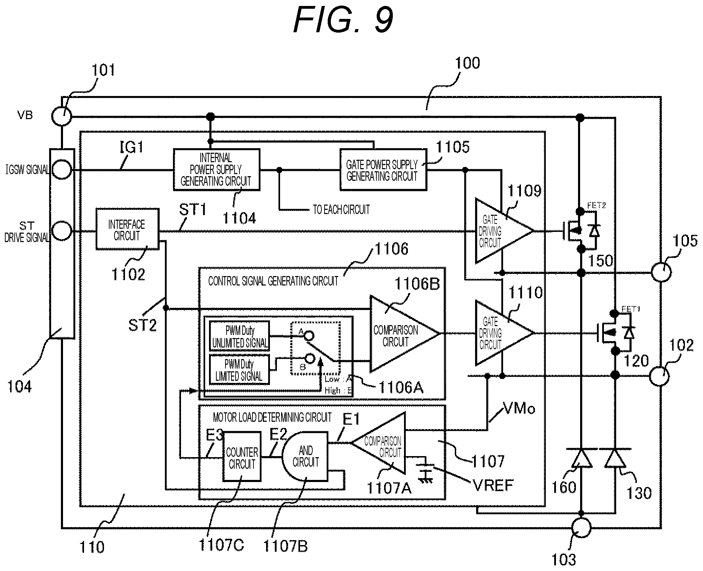

FIGs. 8 and 9 are yet another arrangement .

FIG. 8 is a block diagram of an entire structure of an engine starter, and FIG. 9 is a block diagram of a structure of a starter control device (STM). The components and signals which are the same as those in FIGs. 1 and 2 are denoted with the same reference numerals.

In FIG. 1, the control signal of the engine starter 10 includes two signals, i.e., the Mo drive signal and the So drive signal. However, as illustrated in FIG. 8, the control signal is configured of an ST drive signal which includes both a signal for driving a solenoid 11 and a signal for driving the starter motor 14.

Also, the controller 110 outputs the ST drive signal via an interface circuit 1102 as an ST1 signal and an ST2 signal. The ST1 signal is input to the gate driving circuit 1109, and the ST2 signal is input to a control signal generating circuit 1106 and a motor load determining circuit 1107. Although the control signal from the ECM 70 is a single signal, the controller 110 functions similarly to the first arrangement.

The ST drive signal may be a data communication signal corresponding to a serial communication function including information of a setting value such as a PWM limit signal and a VREF provided in the controller 110.

In addition, the ST drive signal may be the data communication signal including information indicating the state of the engine starter 10 such as a voltage signal between motor terminals.

As described above, according to the fourth arrangement, the communication between the ECM 70 and the engine starter 10 is performed by using a single signal line, and the engine can be started without causing overload to the starter motor when the engine is restarted after idling stop is allowed.

Also, by using the single signal line, the wiring cost of the ECM 70 and the engine starter 10 can be reduced, and a possibility of a failure caused by a signal line can be reduced, and a malfunction of the engine starter can be prevented. As described above, even when the starter motor is rotated by the restart request in a state where the reverse rotation of the engine is predicted or is performed, the engine start control device according to the present invention prevents the generation of the excessive load to damage the starter motor drive force transmission mechanism provided between the starter motor and the engine. Accordingly, while the damage of the starter motor drive force transmission mechanism is prevented, the flow of the excessive load current in the starter motor can be prevented. Therefore, the engine can be restarted without impairing the engine starting performance while preventing the decrease in the battery voltage caused by the excessive load current. In other words, according to the present invention, when the engine is restarted in a scene of change-of-mind, the decrease in the battery voltage caused by the excessive load can be prevented by preventing the excessive load to the starter motor, and the engine restart response to the restart request of the driver can be faster.

### Reference Signs List

10 engine start control device
11 solenoid switch
12 shift mechanism
13 pinion
14 starter motor
20 ring gear
50 battery
60 ignition switch (IG-SW)
70 engine control device (ECM)
80 relay
100 starter control device (STM)
110 pre-driver
120, 150 semiconductor switch (FET)
130, 160 flywheel diode
B, S, M, 101, 102, 103, 104 connection terminal of engine starter

## Claims

1. An engine starter (10) for an engine having an idling stop function comprising:
a pinion (13) configured to be engaged with a ring gear (20) coupled to the engine;
a solenoid switch (11) connected in parallel to a starter motor (14), wherein the solenoid switch (11) is configured to move the pinion (13) to a side of the ring gear (20) by using a current supplied from a battery (50);
the starter motor (14) configured to rotate the pinion (13) by using the current; and
a starter controller configured to supply a necessary current to the starter motor (14) and the solenoid switch (11) based on a signal from a control device that issues a command for the engine to start or restart after an idling stop of the engine, wherein
the starter controller includes a starter motor load determining unit (1107) which is configured to determine a load state of the starter motor (14) based on an inter-terminal voltage of the starter motor (14) when the starter motor (14) is rotated according to the signal;
wherein the starter motor load determining unit (1107) is further configured to determine that the starter motor (14) is in an overload state when the inter-terminal voltage of the starter motor (14) reaches a predetermined state relative to a reference voltage; and
wherein
when the starter motor load determining unit has determined that the starter motor (14) is in the overload state, energization from the starter controller to the starter motor (14) is restricted, wherein
when the energization restriction has been performed for a predetermined time, the energization restriction is canceled, and a test current is flown to the starter motor (14) based on the command, and
when it is determined that the starter motor (14) is in the overload state, the energization to the starter motor (14) is restricted again.

2. The engine starter (10) according to claim 1, wherein
the solenoid switch (11) is energized by using a second power supply line different from a power supply line to the starter motor (14) so as not to restrict the energization to the solenoid switch (11) when the energization to the starter motor (14) is restricted.

3. The engine starter (10) according to claim 2, wherein
the second power supply line is connected to an input terminal of the solenoid switch (11) via a switch unit, and a semiconductor element is used for the switch unit.

4. The engine starter (10) according to claim 1, wherein in a state where the engine is reversely rotated, the inter-terminal voltage of the starter motor (14) is decreased and when the state where the inter-terminal voltage of the starter motor (14) is equal to or below a threshold for a predetermined time the starter motor load determining unit determines that the starter motor (14) is in the overload state.

## Patentansprüche

1. Motorstarter (10) für einen Motor mit Leerlaufstoppfunktion, umfassend:
ein Ritzel (13), das konfiguriert ist, um mit einem Hohlrad (20) in Eingriff gebracht zu werden, das mit dem Motor gekoppelt ist;
einen Magnetschalter (11), der parallel zu einem Startermotor (14) geschaltet ist, wobei der Magnetschalter (11) konfiguriert ist, um das Ritzel (13) unter Verwendung eines Stroms, der von einer Batterie (50) zugeführt wird, zu einer Seite des Hohlrads (20) zu bewegen;
wobei der Startermotor (14) konfiguriert ist, um das Ritzel (13) unter Verwendung des Stroms zu drehen; und
eine Startersteuerung, die konfiguriert ist, um dem Startermotor (14) und dem Magnetschalter (11) basierend auf einem Signal von einer Steuervorrichtung, die einen Befehl zum Starten oder Neustarten des Motors nach einem Leerlaufstopp des Motors ausgibt, einen notwendigen Strom zuzuführen, wobei
die Startersteuerung eine Startermotorlastbestimmungseinheit (1107) beinhaltet, die konfiguriert ist, um einen Lastzustand des Startermotors (14) basierend auf einer Zwischenklemmenspannung des Startermotors (14) zu bestimmen, wenn der Startermotor (14) gemäß dem Signal gedreht wird;
wobei die Startermotorlastbestimmungseinheit (1107) ferner konfiguriert ist, um zu bestimmen, dass sich der Startermotor (14) in einem Überlastzustand befindet, wenn die Zwischenklemmenspannung des Startermotors (14) einen vorbestimmten Zustand relativ zu einer Referenzspannung erreicht; und
wobei
wenn die Startermotorlastbestimmungseinheit bestimmt hat, dass sich der Startermotor (14) im Überlastzustand befindet, die Erregung von der Startersteuerung zum Startermotor (14) eingeschränkt wird, wobei
wenn die Erregungseinschränkung für eine vorbestimmte Zeit durchgeführt wurde, die Erregungseinschränkung aufgehoben wird und basierend auf dem Befehl ein Teststrom zum Startermotor (14) fließt, und
wenn bestimmt wird, dass sich der Startermotor (14) im Überlastzustand befindet, die Erregung zum Startermotor (14) wieder eingeschränkt wird.

2. Motorstarter (10) nach Anspruch 1, wobei
der Magnetschalter (11) unter Verwendung einer zweiten Stromversorgungsleitung, die sich von einer Stromversorgungsleitung zum Startermotor (14) unterscheidet, erregt wird, um die Erregung zum Magnetschalter (11) nicht einzuschränken, wenn die Erregung zum Startermotor (14) eingeschränkt ist.

3. Motorstarter (10) nach Anspruch 2, wobei
die zweite Stromversorgungsleitung über eine Schalteinheit mit einem Eingangsanschluss des Magnetschalters (11) verbunden ist und ein Halbleiterelement für die Schalteinheit verwendet wird.

4. Motorstarter (10) nach Anspruch 1, wobei in einem Zustand, in dem der Motor rückwärts gedreht wird, die Zwischenklemmenspannung des Startermotors (14) verringert wird und wenn der Zustand, in dem die Zwischenklemmenspannung des Startermotors (14) für eine vorbestimmte Zeit gleich oder unter einem Schwellenwert liegt, die Startermotorlastbestimmungseinheit bestimmt, dass sich der Startermotor (14) im Überlastzustand befindet.

## Revendications

1. Démarreur de moteur (10) pour un moteur ayant une fonction d'arrêt au ralenti comprenant :
un pignon (13) configuré pour être mis en prise avec une couronne dentée (20) couplée au moteur ;
un commutateur à solénoïde (11) connecté en parallèle à un moteur de démarreur (14), dans lequel le commutateur à solénoïde (11) est configuré pour déplacer le pignon (13) vers un côté de la couronne dentée (20) en utilisant un courant fourni par une batterie (50) ;
le moteur de démarreur (14) configuré pour faire tourner le pignon (13) en utilisant le courant ; et
un dispositif de commande de démarreur configuré pour fournir un courant nécessaire au moteur de démarreur (14) et au commutateur à solénoïde (11) sur la base d'un signal provenant d'un dispositif de commande qui émet une commande pour que le moteur démarre ou redémarre après un arrêt au ralenti du moteur, dans lequel
le dispositif de commande de démarreur comprend une unité de détermination de charge de moteur de démarreur (1107) qui est configurée pour déterminer un état de charge du moteur de démarreur (14) sur la base d'une tension entre bornes du moteur de démarreur (14) lorsque le moteur de démarreur (14) est mis en rotation en fonction du signal ;
dans lequel l'unité de détermination de charge de moteur de démarreur (1107) est en outre configurée pour déterminer que le moteur de démarreur (14) est dans un état de surcharge lorsque la tension entre bornes du moteur de démarreur (14) atteint un état prédéterminé par rapport à une tension de référence ; et
dans lequel
lorsque l'unité de détermination de charge de moteur de démarreur a déterminé que le moteur de démarreur (14) est dans l'état de surcharge, l'alimentation du dispositif de commande de démarreur au moteur de démarreur (14) est restreinte, dans lequel
lorsque la restriction d'alimentation a été effectuée pendant un temps prédéterminé, la restriction d'alimentation est annulée, et un courant de test est amené au moteur de démarreur (14) sur la base de la commande, et
lorsqu'il est déterminé que le moteur de démarreur (14) est dans l'état de surcharge, l'alimentation au moteur de démarreur (14) est à nouveau restreinte.

2. Démarreur de moteur (10) selon la revendication 1, dans lequel
le commutateur à solénoïde (11) est alimenté en utilisant une seconde ligne d'alimentation différente d'une ligne d'alimentation au moteur de démarreur (14) afin de ne pas restreindre l'alimentation au commutateur à solénoïde (11) lorsque l'alimentation au moteur de démarreur (14) est restreinte.

3. Démarreur de moteur (10) selon la revendication 2, dans lequel
la seconde ligne d'alimentation est connectée à une borne d'entrée du commutateur à solénoïde (11) via une unité de commutation, et un élément semi-conducteur est utilisé pour l'unité de commutation.

4. Démarreur de moteur (10) selon la revendication 1, dans lequel dans un état où le moteur est mis en rotation en sens inverse, la tension entre bornes du moteur de démarreur (14) est diminuée et lorsque l'état où la tension entre bornes du moteur de démarreur (14) est égale ou inférieure à un seuil pendant un temps prédéterminé, l'unité de détermination de charge de moteur de démarreur détermine que le moteur de démarreur (14) est dans l'état de surcharge.
